**Europäisches Patentamt**

**European Patent Office**

**Office européen des brevets**

(19)

(11) Veröffentlichungsnummer: **0 009 274**
**B1**

(12) **EUROPÄISCHE PATENTSCHRIFT**

(45) Veröffentlichungstag der Patentschrift:
**14.03.84**

(51) Int. Cl.³: **C 08 L 95/00,** C 08 K 5/01

(21) Anmeldenummer: **79200483.0**

(22) Anmeldetag: **01.09.79**

(54) Modifizierte Kunststoffmassen aus thermoplastischen Kunststoffen und Rückständen der Kohlehydrierung.

(30) Priorität: **11.09.78 DE 2839377**

(43) Veröffentlichungstag der Anmeldung:
**02.04.80 Patentblatt 80/7**

(45) Bekanntmachung des Hinweises auf die Patenterteilung:
**14.03.84 Patentblatt 84/11**

(84) Benannte Vertragsstaaten:
**BE FR GB LU NL**

(56) Entgegenhaltungen:
**DE - B - 2 441 203**
**DE - C - 746 083**
**US - A - 3 249 567**

**Die Akte enthält technische Angaben, die nach dem Eingang der Anmeldung eingereicht wurden und die nicht in dieser Patentschrift enthalten sind.**

(73) Patentinhaber: **Bergwerksverband GmbH,**
**Franz-Fischer-Weg 61, D-4300 Essen 13 (DE)**

(72) Erfinder: **Romey, Ingo, Dr., Sandkamp 25,**
**D-4224 Hünxe 2 (DE)**
Erfinder: **El-Roy, Menachem, 26, Vitkinstrasse, Haifa (IL)**

BUNDESDRUCKEREI BERLIN

## Modifizierte Kunststoffmassen aus thermoplastischen Kunststoffen und Rückständen der Kohlehydrierung

Die Erfindung betrifft modifizierte Kunststoffmassen, bestehend aus Elastomeren sowie deren Misch- und Copolymeren mit thermoplastischen Eigenschaften und aus Verflüssigungsprodukten aus Kohle sowie gegebenenfalls gebräuchlichen Füllstoffen.

Kunststoffmassen dieser Art werden hauptsächlich zur Herstellung von Extrusions-, Spritzguß- und Preßmassen verwendet. Sie werden unter anderem auf dem Bau- und Installationssektor für Abdichtungs- und Schutzzwecke eingesetzt, beispielsweise als Folien zur Abdichtung gegen Wasser.

Für die vorgenannten Zwecke sind bereits eine große Zahl von Kunststoffgemischen vorgeschlagen worden, die im wesentlichen aus Äthylen-Copolymerisaten als Kunststoffkomponenten und bestimmten Bitumina auf der Basis von Teer bestehen.

Aus der US-A-3 249 567 sind Stoffgemische aus etwa 5 bis 95 Gew.-% aromatischer Asphalte aus Petroleum und etwa 5 bis 95 Gew.-% Äthylen-Copolymerisaten mit einem Anteil von 10 bis 40 Gew.-% Acrylsäureester, bezogen auf das Gewicht des Copolymerisates, bekannt. Prüfkörper aus solchen Stoffgemischen erreichen Reißfestigkeiten bis zu etwa $4,5 \times 10^6$ N/m$^2$ und Reißdehnungen bis zu etwa 900%.

Aus der DE-B-2 441 403 sind Formmassen bekannt, die im wesentlichen aus Äthylen-Copolymerisaten und Bitumen bestehen, wobei das Bitumen ein Extrakt- und/oder Fällungsbitumen ist, welches entsprechend DIN 1995 eine Penetration bei 25°C kleiner als 10 aufweist. Prüfkörper aus solchen Massen weisen Reißfestigkeiten bis zu etwa $8 \times 10^6$ N/m$^2$ und Reißdehnungen bis zu etwa 1100% auf.

Weiterhin sind aus der DE-C-1 948 526 Dichtungsbahnen bekannt, welche aus etwa 45 bis 50 Gew.-% eines Gemisches aus Polyäthylen-Acrylsäureester-Copolymerisat und einem kleinen Anteil Bitumen, etwa 10 bis 15 Gew.-% Hochdruckpolyäthylen sowie etwa 40 Gew.-% Anthrazitstaub mit einer Körnung bis 30 μ und bis zu 30 Gew.-%, bezogen auf den Anthrazitstaubanteil, aus brennbaren Bestandteilen bestehen. Je nach Verarbeitungsmethode werden Reißfestigkeiten zwischen 2 und $5 \times 10^6$ N/m$^2$ und Reißdehnungen zwischen 300 und 1000% erreicht.

Aus der DE-C-746 083 ist eine Kunstmasse bekannt, bei der Extraktionsrückstände aus Kohle — mit Erweichungspunkten etwa bei oder unterhalb Raumtemperatur — als Weichmacher oder Füllstoff verwendet werden. Hierbei ist aber lediglich eine Phenol-Formaldehyd-Kunstmasse als mögliche Anwendung nachgewiesen und es kann angenommen werden, daß die Gewichtsanteile an Rückstand in der Kunstmasse vergleichbar gering sind.

Schließlich sind in der DE-A-2 801 154.3 Stoffgemische beschrieben, die aus 30 bis 90 Gew.-% thermoplastischen Kunststoffen, insbesondere Polyolefinen und deren Copolymeren sowie gegebenenfalls bis 25 Gew.-% Elastomeren mit thermoplastischen Eigenschaften und aus 20 bis 60 Gew.-% eines bei Normaldruck oberhalb 350°C siedenden Produktes aus der Verflüssigung von Kohle sowie gegebenenfalls Füllstoffen bestehen. Es werden Reißfestigkeiten von 4 bis $26 \times 10^6$ N/m$^2$ und Reißdehnungen von 10 bis 660% erreicht.

Bei diesem Stoffgemisch ist es beonders wichtig, daß aus dem Verflüssigungsprodukt aus Kohle alle Anteile mit einem Kp bei Normaldruck unter 350°C vor dem Mischen mit dem Kunststoff bei einer Verarbeitungstemperatur von 150 bis 250°C entfernt sind. Es handelt sich also um hochschmelzende Rückstände aus der Kohlehydrierung. Außerdem haben die Stoffgemische mit 30 – 90 Gew.-%, bezogen auf Gemisch, einen hohen Kunststoffanteil. Der Rückstand ist hier nur Streckmittel für den Kunststoffanteil.

Der Erfindung liegt die Aufgabe zugrunde, in Formmassen den Anteil an Rückständen aus der Kohlehydrierung und damit auch die Gesamtmenge an festen Ballaststoffen aus der Kohlehydrierung und gebräuchlichen Füllstoffen beträchtlich zu erhöhen.

Diese Aufgabe wird erfindungsgemäß dadurch gelöst, daß das Verflüssigungsprodukt ein bei der extraktiven Kohlehydrierung anfallender Rückstand mit einem Erweichungspunkt von 50° bis 150°C nach DIN 1995 ist.

Weitere Ausbildungsformen der Erfindung bestehen darin, daß

a) hoch, aber noch unterhalb 150°C nach DIN 1995 schmelzender Rückstände mit Weichmachern, insbesondere mit einem Mineralöl oder einem Acrylester, gemischt werden,

b) der Rückstand aus der Kohlehydrierung und gebräuchliche Füllstoffe insgesamt von 40 bis 80 Gew.-% der gesamten Masse betragen,

c) der Rückstand aus der Kohlehydrierung 50 bis 70 Gew.-% des Gesamtgewichtes der füllstofffreien Kunststoffmasse beträgt,

d) der Anteil an Elastomeren bis zu insgesamt 20 – 40 Gew.-% des Gesamtgewichtes beträgt,

e) der Rückstand aus der Kohlehydrierung von festen, nicht schmelzenden Beimischungen befreit ist,

f) die Elastomeren aus gegebenenfalls teilweise vernetzbaren Co- oder Mischpolymerisaten bestehen, die eine oder mehrere aktive Gruppen mit polaren, aromatischen oder cyclischen Eigenschaften besitzen und

g) der Elastomeren-Anteil aus einem oder einem Gemisch mehrerer Polymeren besteht.

Kohle wird beispielsweise unter hohen Drükken von etwa 100 bis 700 bar und bei Temperaturen von etwa 400 bis 500°C meistens in Gegenwart von Katalysatoren verflüssigt. Hierzu wird in der Regel auf feiner als 200 μm aufgemahlene Kohle mit einem Anreiböl vermischt. Je nach angestrebter Zusammensetzung des Rückstandes aus der Kohlehydrierung wird mehr oder weniger Wasserstoff, entweder gasförmig oder in Form eines wasserstoffabgebenden Anreiböls, zugesetzt. Je mehr Wasserstoff verwendet wird, umso mehr niedrigsiedende Rückstände der Kohlehydrierung erhält man. Die Skala der gewonnenen Produkte umfaßt eine ganze Reihe von unterschiedlichen Kohlenwasserstoffen mit steigenden Siedetemperaturen, beginnend meist mit Methan über leicht- bis zu schwersiedenden Ölen sowie nichtlöslichen Kohlebestandteilen und Mineralien (Asche). Bekannte Kohlehydrierungsverfahren sind beispielsweise das Bergius-Pier-Verfahren und das Pott-Broche-Verfahren.

Es wurde nun überraschenderweise gefunden, daß aus den Verflüssigungsprodukten aus Kohle die Rückstände mit einem Erweichungspunkt von 50 – 150°C vorzüglich als Bestandteil der eingangs beschriebenen Kunststoffmassen geeignet sind. Außerdem lassen sich bei einer Verarbeitungstemperatur von 90 bis 160°C bis zu 70 Gew.-%, bezogen auf das Gesamtgewicht, mit Misch- oder Copolymerisaten von Thermoplasten oder unvernetzten Elastomeren vermischen. Dies beruht auf der Anwesenheit von polaren, aromatischen oder cyclischen (beispielsweise Terpenen) Komponenten im Kunststoffanteil. Diese aktiven Komponenten wirken günstig auf die Verträglichkeit der Kunststoffe mit dem Rückstand aus der Kohlehydrierung sowie auch auf die Verträglichkeit der Füllstoffe, demnach auch auf die mechanischen Eigenschaften der Produkte, ein.

Solche aktiven Komponenten sind beispielsweise Acrylnitril-Polymerisate (NBR) mit etwa 39% Acrylnitrilgehalt (AN), Butadien-Styrol-Copolymerisate (SBR) mit etwa 23,5 – 30% Styrolgehalt, Äthylidennorbornen-Copolymerisate (EPDM/EN) mit einer Mooneyviskosität ML 4 (100°C) von 45 – 85, ferner Vinylacetat-Copolymerisate mit 12 – 30% Vinylacetatgehalt sowie Vinylchlorid-Copolymerisate mit Vinylacetat oder Acrylnitril.

Es wurde weiterhin gefunden, daß mit einem Ansteigen der polaren, aromatischen oder cyclischen Komponenten bis auf 30 Gew.-% im Kunststoffanteil auch der Gewichtsanteil des Rückstandes in der Gesamtmasse von 35 bis 70% ansteigen kann. Gleichzeitig kann der Füllstoff von 40 auf 0 Gew.-% sinken. Es wurden nämlich folgende Abhängigkeiten festgestellt:

a)   Bei einer Senkung des Erweichungspunktes des Rückstandes kann mehr Rückstand in die Kunststoffmasse bei gleichbleibendem Füllstoffanteil eingearbeitet werden. Hierbei steigt die Reißdehnung an.

b)   Bei einer Erhöhung des Erweichungspunktes des Rückstandes steigt dagegen die Reißfestigkeit und sinkt die Reißdehnung.

c)   Bei einer Senkung des Polymerisationsgrades des Kunststoffes oder dessen Erweichungspunktes ist ein kleinerer Anteil an polaren, aromatischen oder cyclischen Gruppen im Kunststoffanteil erforderlich, um ähnliche Verträglichkeiten und mechanische Werte zu erzielen.

d)   Mit dem Anteil der polaren, aromatischen oder cyclischen Komponenten im Kunststoffanteil sinkt dagegen die Reißfestigkeit und steigt die Reißdehnung bei gleichbleibendem Füllstoffanteil.

Je nach dem Anteil des Rückstandes aus der Kohlehydrierung mit einem Erweichungspunkt von 50 bis 150°C an festen Ballaststoffen, also ungelösten Kohlebestandteilen, Mineralien und gegebenenfalls Katalysatoren, ist eine Zugabe von gebräuchlichen Füllstoffen, wie beispielsweise Ruß, Anthrazitstaub, Kreide, Gesteinsmehl möglich. Feste Ballaststoffe und Füllstoffe sollten nicht mehr als insgesamt 50 Gew.-% der Kunststoffmasse betragen.

Das Abtrennen der festen Ballaststoffe aus dem erfindungsgemäßen Rückstand der Kohlehydrierung kann für Kunststoffmassen, an die hohe Anforderungen gestellt werden, erwünscht sein. Die Abtrennung kann in bekannter Weise, beispielsweise durch Druckfiltration, erfolgen.

Die Herstellung von Formkörpern und Folien erfolgt in bekannter Weise durch beispielsweise Mischen und Kneten der Mischungsbestandteile der Kunststoffmasse bei Temperaturen von 90 bis 160°C und anschließende Verarbeitung zumeist in Extrudern- und Spritzgußmaschinen.

## Beispiel 1

### Modifizierte Kunststoffmassen für Folien

Es werden 15,4 Gewichtsteile Acrylnitril-Butadien-Copolymerisat mit 39% Acrylnitrilgehalt (NBR) und einer Mooneyviskosität ML 4 (100°C) von 65±7, 4,0 Gewichtsanteile Vinylacetat-Copolymerisat mit etwa 15% Vinylacetat (VA) und einem Erweichungspunkt von 90 – 96°C nach DIN 1995, 3,8 Gewichtsteile Butadien-Styrol-Copolymerisat mit 23,5% Styrolgehalt (SBR), 50,6 Gewichtsteile Rückstand der Kohlehydrierung mit 16,5% festen, nichtschmelzenden Stoffen und einem Erweichungspunkt von 54°C nach DIN 1995 und 26,2 Gewichtsteile Anthrazitstaub bei 135°C in einem Intensivmischer oder Zwangskneter gemischt (geknetet, gewalzt oder extrudiert).

Eine Folie aus dieser Kunststoffmasse hat eine Reißfestigkeit von $3,0 \times 10^6$ N/m² und eine Reißdehnung (bei 23°C) von 600%.

## Beispiel 2

### Kunststoffmasse für Spritzguß

35 Gewichtsanteile Acrylnitril-Butadien-Copolymerisat mit 39% Acrylnitrilgehalt (NBR) und einer Mooneyviskosität ML 4 (100°C) von 65±7 und 65 Gewichtsteile filtrierter Rückstand der Kohlehydrierung mit einem Erweichungspunkt von 129°C nach DIN 1995 werden bei 150°C in einem Intensivmischer oder Zwangskneter gemischt (geknetet) und granuliert.

Ein Formteil aus dieser Spritzgußmasse hat eine Reißfestigkeit von $16,2 \times 10^6$ N/m² und eine Reißdehnung (bei 23°C) von 580%.

## Beispiel 3

### Modifizierte Kunststoffmasse für Extrusionsteile

23 Gewichtsteile Acrylnitril-Butadien-Copolymerisat mit 39% Acrylnitrilgehalt (NBR) mit einer Mooneyviskosität ML 4 (100°C) von 65±7, 37 Gewichtsteile filtrierter Rückstand der Kohlehydrierung mit einem Erweichungspunkt von 129°C nach DIN 1995 und 40 Gewichtsteile Anthrazitpulver werden bei 150°C in einem Zwangskneter geknetet und extrudiert.

Eine Folie aus dieser Kunststoffmasse hat eine Reißfestigkeit von $10,0 \times 10^6$ N/m² und eine Reißdehnung (bei 23°C) von 220%.

## Beispiel 4

### Modifizierte Kunststoffmasse für Folien

30 Gewichtsteile Butadien-Styrol-Copolymerisat mit 30% Styrolgehalt, 30 Gewichtsteile eines Rückstandes der Kohlehydrierung mit 29% festen, nichtschmelzenden Stoffen und einem Erweichungspunkt von 129°C nach DIN 1995, 10 Gewichtsteile Schweröldestillat aus der Kohlehydrierung mit einem Siedepunkt von 350°C bei Normaldruck und 30 Gewichtsteile Anthrazitpulver werden bei 150°C in einem Zwangskneter geknetet.

Eine Folie aus der Kunststoffmasse hat eine Reißfestigkeit von $2,8 \times 10^6$ N/m² und eine Reißdehnung (bei 23°C) von 140%.

## Beispiel 5

### Kunststoffmasse für die Umwicklung von Rohren

32 Gewichtsteile Acrylnitril-Butadien-Copolymerisat mit 39% Acrylnitrilgehalt und einer Mooneyviskosität ML 4 (100°C) von 65±7, 53,6 Gewichtsteile eines Rückstandes der Kohlehydrierung mit 12% nichtschmelzenden Stoffen und einem Erweichungspunkt von 76°C nach DIN 1995 und 14,4 Gewichtsteile Anthrazitpulver werden bei 150°C in einem Zwangskneter gemischt.

Eine Folie aus dieser Kunststoffmasse hat eine Reißfestigkeit von $3,9 \times 10^6$ N/m² und eine Reißdehnung (bei 23°C) von 1000%.

## Patentansprüche

1. Modifizierte Kunststoffmassen, bestehend aus Elastomeren sowie deren Misch- und Copolymeren mit thermoplastischen Eigenschaften und aus Verflüssigungsprodukten aus Kohle sowie gegebenenfalls Füllstoffen, dadurch gekennzeichnet, daß das Verflüssigungsprodukt bis zu 70 Gew.-% der Kunststoffmasse beträgt und ein bei der extraktiven Kohlehydrierung anfallender Rückstand mit einem Erweichungspunkt von 50 bis 150°C nach DIN 1995 ist.

2. Kunststoffmassen nach Anspruch 1, dadurch gekennzeichnet, daß hoch, aber noch unterhalb 150°C nach DIN 1995 schmelzende Rückstände mit Weichmachern, insbesondere einem Mineralöl oder einem Acrylester, gemischt werden.

3. Kunststoffmassen nach Anspruch 1 und 2, dadurch gekennzeichnet, daß der Rückstand aus der Kohlehydrierung und Füllstoffe insgesamt von 40 bis 80 Gew.-% der gesamten Masse betragen.

4. Kunststoffmassen nach Anspruch 1 bis 3, dadurch gekennzeichnet, daß der Rückstand aus der Kohlehydrierung 50 bis 70 Gew.-% des Gesamtgewichtes der füllstofffreien Kunststoffmasse beträgt.

5. Kunststoffmassen nach Anspruch 1 bis 4, dadurch gekennzeichnet, daß der Anteil an Elastomeren 20−40 Gew.-% des Gesamtgewichtes beträgt.

6. Kunststoffmassen nach Anspruch 1 bis 5, dadurch gekennzeichnet, daß der Rückstand aus der Kohlehydrierung von festen, nicht schmelzenden Beimischungen befreit ist.

7. Kunststoffmassen nach Anspruch 1 bis 6, dadurch gekennzeichnet, daß die Elastomeren aus gegebenenfalls teilweise vernetzbaren Co- oder Mischpolymerisaten bestehen, die eine oder mehrere aktive Gruppen mit polaren, aromatischen oder cyclischen Eigenschaften besitzen.

8. Kunststoffmassen nach Anspruch 1 bis 7, dadurch gekennzeichnet, daß der Elastomeren-Anteil aus einem oder einem Gemisch mehrerer Polymeren besteht.

## Claims

1. Modified plastics material masses comprising elastomers and interpolymers and copolymers thereof with thermoplastic properties and plasticizing products made from coal and, where appropriate, fillers, characterized in that the plasticizing product is up to 70 wt.% of the plastics mass and is a residue obtained during extractive hydrogenation of coal, having a softening point of 50 to 150° C according to DIN 1995.

2. Plastics material masses according to claim 1, characterized in that residues which melt at a high temperature, but still below 150°C according to DIN 1995, are mixed with plasticizers, particularly with a mineral oil or an acrylic ester.

3. Plastics material masses according to claim 1 and 2, characterized in that the residue from the coal hydrogenation and fillers together constitute from 40 to 80 wt.% of the total mass.

4. Plastics material masses according to claim 1 to 3, characterized in that the residue from coal hydrogenation constitutes 50 to 70 wt.% of the total weight of the plastics material mass without filler.

5. Plastics material masses according to claim 1 to 4, characterized in that the proportion of elastomers is 20 − 40 wt.% of the total weight.

6. Plastics materials masses according to claims 1 to 5, characterized in that solid non-melting impurities are removed from the coal hydrogenation residue.

7. Plastics materials masses according to claim 1 to 6, characterized in that the elastomers comprise copolymerides and interpolymerides which, where appropriate, can be cross-linked in part and have one or more active groups with polar, aromatic, or cyclic characteristics.

8. Plastics materials masses according to claim 1 to 7, characterized in that the elastomer part consists of one polymer or of a mixture of a plurality of polymers.


**Revendications**

1. Matières plastiques modifiées, constituées d'élastomères ainsi que de leurs polymères mélangés et copolymères avec des propriétés thermoplastiques et de produits de la liquéfaction du charbon, ainsi que le cas échéant de charges, caractérisées en ce que le produit de liquéfaction représente jusqu'à 70% en poids de la masse de matière plastique et est un résidu se formant lors de l'hydrogénation extractive du charbon, avec un point de ramollissement de 50 à 150°C selon DIN 1995.

2. Matières plastiques selon la revendication 1, caractérisées en ce qu'on mélange des résidus fondant à température élevée, mais encore au-dessous de 150°C selon DIN 1995 avec des plastifiants, en particulier une huile minérale ou un ester acrylique.

3. Matières plastiques suivant la revendication 1 et 2, caractérisées en ce que le résidu de l'hydrogénation du charbon et les charges représentent au total de 40 à 80% en poids de la masse totale.

4. Matières plastiques suivant l'une quelconque des revendications 1 à 3, caractérisées en ce que le résidu de l'hydrogénation du charbon représente de 50 à 70% du poids total de la masse de matière plastique exempte de charges.

5. Matières plastiques suivant l'une quelconque des revendications 1 à 4, caractérisées en ce que la proportion d'élastomères est de 20 à 40% en poids du poids total.

6. Matières plastiques suivant l'une quelconque des 1 à 5, caractérisées en ce que le résidu de l'hydrogénation du charbon est débarrassé des produits auxiliaires solides, infusibles.

7. Matières plastiques suivant l'une quelconque des revendications 1 à 6, caractérisées en ce que les élastomères se composent de copolymères et de polymères mélangés partiellement réticulables le cas échéant, qui possèdent un ou plusieurs groupes actifs avec des propriétés polaires, aromatiques ou cycliques.

8. Matières plastiques suivant l'une quelconque des revendications 1 à 7, caractérisées en ce que la fraction élastomère se compose d'un polymère ou d'un mélange de plusieurs polymères.